# EUROPEAN PATENT APPLICATION

(11) **EP 4 593 264 A1**
(43) Date of publication of application: **30.07.2025**
(21) Application number: 24154077.2
(22) Date of filing: 26.01.2024
(51) Int. Cl.: H02K 9/197, H02K 11/33

(54) **ELECTRIC MOTOR**

(71) Applicant: Volvo Car Corporation, 405 31 Göteborg (SE)
(72) Inventor: ZHANG, Chi, 405 31 Göteborg (SE)
(74) Representative: Maiwald GmbH

(57) **Abstract**

The disclosure relates to an electric motor (10) comprising a rotor (11), a stator (12), a power module section (21) having one or more power modules (22) of an inverter (20), a first channel (30) arranged in between the stator (12) and a first side (23) of the power module section (21) for conveying a coolant (32) in between the stator (12) and the first side (23) of the power module section (21), and a second channel (31) arranged at a second side (24) of the power module section (21) for conveying a coolant (32) alongside the second side (24) of the power module section (31), the first side (23) being located opposite of the second side (24).

## Description

### TECHNICAL FIELD

The present disclosure relates to an electric motor and a vehicle.

### BACKGROUND ART

Different designs of electric motors and inverters have been proposed. For example, in conventional structures, the inverter and the parts of the electric motor, i.e., rotor and stator, are independent units connected by relatively long electrical connection cables. This design requires a lot of space and has a relatively high weight, which is disadvantageous in mobile applications, such as in vehicles. Further, this conventional structure brings about electrical losses due to the long cables. Ultimately, when used in vehicles, the conventional structure indicates a low power density and thus a low range.

Another previously proposed design is the provision of the inverter on top of the electrical motor parts. This solution not only reduces the electrical losses due to the omittance of long electrical connection cables but is also easier to maintain. However, the overall volume of this design is still quite high, which results in a relatively low power density. On the other hand, the gravity centers of inverter and electric motor parts are not aligned with each other, which brings about the risk of vibration of the electric motor.

There is still a need for an improved design of an electric motor with an inverter, which reduces the risk and/or magnitude of vibration occurrence, is of low weight and volume, can achieve a high heat dissipation efficiency and/or has a favorable gravity center.

### SUMMARY

The above problems are at least partially solved or alleviated by the subject matter of the independent claims of the present disclosure, wherein further examples are incorporated in the dependent claims.

According to a first aspect of this disclosure, there is provided an electric motor SE:AFE
comprising a rotor, a stator, a power module section having one or more power modules of an inverter, a first channel arranged in between the stator and a first side of the power module section for conveying a coolant in between the stator and the first side of the power module section, and a second channel arranged at a second side of the power module section for conveying a coolant alongside the second side of the power module section, the first side being located opposite of the second side.

Accordingly, the electric motor could be described as a type of inverter-integrated electric motor, having the rotor, stator and one or more power modules integrated in the design of a single device or unit, i.e., the electric motor or, in other words, electric machine. Channels, in particular cooling channels configured for conveying a coolant therethrough, are provided inside the electric motor. At least two channels are provided in the electric motor, namely a first channel and a second channel, wherein they are provided at opposite sides of the power module section having one or more power modules. Thereby, the power module or power modules may be effectively cooled from two opposite sides during operation of the electric motor, hence increasing the efficiency of the inverter. Further, by having the stator and the power module section sharing the first of the two channels for cooling, the cooling integration may be kept compact yet efficient. Ultimately, this provides for less electrical losses and relatively low volume of the electric motor.

Thus, the proposed electric motor has an increased heat dissipation efficiency and, at the same time, deep integration of the inverter and electric motor parts by sharing the channels. Thereby, the weight and volume of the electric motor may be reduced, and the efficiency of the electric motor may be increased. When using the electric motor in a vehicle, e.g., an electric vehicle, the (driving) range of the vehicle may be increase. Further, by having the defined arrangement of the rotor, stator and power module section with the channel, an improved gravity center for the entire electric motor is provided, which reduces the risk of vibrations.

The inverter may be partially or substantially fully integrated into the electric motor. This means that one or more parts or all parts of the inverter, such as the power module section and the below described capacitor section, may be integrated into electric motor, while other or further parts may be provided elsewhere, i.e., outside the electric motor. Generally, the inverter, in particular by means of its power module or power modules and/or capacitor or capacitors, may be configured to convert the direct current (DC) from a power source, e.g., a battery or fuel cell, into alternating current (AC), which may be required by the electric motor. This conversion may allow for precise control of the electric motor's speed and torque. The power module or modules may include control electronics configured to manage the inverter's operation, which may include controlling the output frequency and voltage to regulate the electric motor's performance. The power module or modules may also include safety features and/or fault detection mechanisms to protect the power module or modules and the overall electric vehicle.

Similarly, a cooling system may be partially or substantially fully integrated into the electric motor. This means that one or more parts or all parts of the cooling system, such as the cooling channels, may be integrated into electric motor, while other or further parts, such as a radiator, hoses, pump, fan, etc. may be provided elsewhere, i.e., outside the electric motor, or inside the electric motor. The cooling channels may be connected, e.g., via hoses, to the parts of the cooling system outside of the electric motor for cooling the coolant.

In an example, the first channel may be extending around at least half of a circumference of the power module section or the stator. In particular, the first channel may be extending around more than half, in particular substantially in full, around the circumference of the power module section or the stator. The circumference of the power module section or the stator may be in particular seen in the cross-section of the electric motor.

In an example, the rotor, the stator, at least part of the power module section, at least part of the first channel, and/or at least part of the second channel may be arranged coaxial to each other. In particular, the rotor, the stator, the power module section, the first channel, and/or the second channel may be arranged coaxial to each other. Thereby, a compact design of the electric motor may be provided, in which the cooling by means of the channels is integrated in between the coaxially arranged rotor, stator and power module section.

In an example, the electric motor may comprise a capacitor section having a capacitor of the inverter. The second channel may be arranged in between the capacitor section and the second side of the power module section for conveying the coolant between the capacitor section and the second side of the power module section. Thereby, the compact yet efficient cooling concept may be further extending to include cooling of the capacitor section of the inverter.

In an example, the second channel may be extending around at least half of a circumference of the power module section or the capacitor section. In particular, the second channel may be extending around more than half, in particular substantially in full, around the circumference of the power module section or the capacitor section. The circumference of the power module section or the capacitor section may be in particular seen in the cross-section of the electric motor.

In an example, at least part of the capacitor section may be surrounded by or surrounding the stator, the rotor, the power module section, the first channel, and/or the second channel. In particular, the capacitor section may be surrounded by or surrounding the stator, the rotor, the power module section, the first channel, and the second channel. The surrounding may be in particular seen in the cross-section of the electric motor. Thereby, a compact design of the electric motor may be provided.

In an example, the rotor, the stator, at least part of the power module section, at least part of the first channel, at least part of the second channel, and/or at least part of the capacitor section may be arranged coaxial to each other. In particular, the rotor, the stator, the power module section, the first channel, the second channel, and the capacitor section may be arranged coaxial to each other. Thereby, a compact design of the electric motor may be provided, in which the cooling by means of the channels is integrated in between the coaxially arranged rotor, stator, power module section and capacitor section of the inverter.

In an example, the electric motor may comprise an electric motor module, the electric motor module comprising three electric motor segments, each one of the electric motor segments comprising at least one core portion of the stator, at least a portion of the first channel, at least a portion of the second channel, and one of the power modules, the electric motor module being configured such that each one of the electric motor segments provides one of three phases of alternating current of the electric motor module. Each one of the core portions may be comprising one or more (stator) cores, in particular winding cores, of the stator. Thereby, a modular electric motor design may be provided, in which three electric motor segments are providing the alternating current in three phases. A multiple of these electric motor modules, e.g., two, three or more, may be provided in the electric motor. The modular design of the electric motor provides for reduced manufacturing and maintenance costs as faulty electric motor segments may be easily replaced.

In an example, the electric motor may comprise two or three electric motor modules. Thereby, an electric motor with a desired power rating may be provided with ease using the modular design thereof.

In an example, the electric motor modules may be electrically connected to each other in parallel. This results in a relatively low DC voltage as output of the electric motor with relatively high current as output of the electric motor.

In an alternative example, the electric motor modules may be electrically connected to each other in series. This results in a relatively high DC voltage as output of the electric motor with relatively low current as output of the electric motor.

In an example, the one or more power modules may be comprising a semiconductor chip. For example, the semiconductor chip or chips may be based on or comprise one or more insulated-gate bipolar transistors (IGBTs) and/or silicon carbide (SiC) MOSFETs. Generally, the power module, in particular the semiconductor chip, may be configured to handle switching of currents and voltages, in particular for enabling efficient power conversion and/or control. Usage of the aforementioned semiconductor chips, which may generate more heat during operation, is enabled or at least largely benefits from the effective double-sided cooling of the power module section.

In an example, the rotor may be at least partially surrounding the stator and the stator may be at least partially surrounding the power module section. In particular, the rotor may be surrounding the stator and the stator may be surrounding the power module section.

In an alternative example, the stator may be at least partially surrounding the rotor and the power module section may be at least partially surrounding the stator. In particular, the stator may be surrounding the rotor and the power module section may be surrounding the stator.

According to a second aspect of this disclosure, there is provided a vehicle comprising the electric motor according to the first aspect of this disclosure.

The vehicle may be an electric vehicle, for example. For example, the electric vehicle may be a battery electric vehicle or a fuel cell vehicle. The vehicle may be a passenger car, bus, truck, motorcycle or similar, for example. The electric motor may be configured for powering any component of the vehicle. In particular, the electric motor may be part of a powertrain of the vehicle for propulsion of the vehicle. Also, multiple of the electric motors according to this disclosure may be provided in a vehicle.

It is noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1a: shows a cross sectional view of an electric motor according to an example of this disclosure;
- Figure 1b: shows an electric motor segment of the electric motor of Fig. 1a;
- Figure 2a: shows a cross sectional view of an electric motor according to a further example of this disclosure;
- Figure 2b: shows an electric motor segment of the electric motor of Fig. 2a;
- Figure 3: shows a schematic view of an example of an electrical connection of electric motor modules in the electric motor of Fig. 1a or 2a;
- Figure 4: shows a schematic view of a further example of an electrical connection of electric motor modules in the electric motor of Fig. 1a or 2a;
- Figure 5: shows a schematic view of a vehicle having the electric motor of Fig. 1a or 2a.

### DETAILED DESCRIPTION

The Figures are merely schematic representations and serve only to illustrate examples of the disclosure. Identical or equivalent elements are in principle provided with the same reference signs.

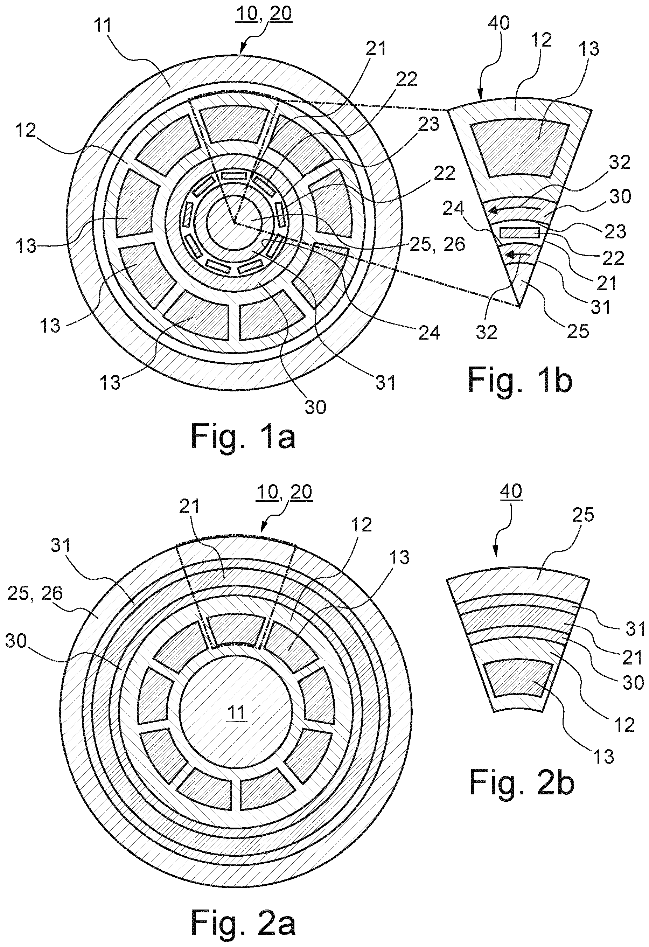

Figure 1a shows a cross-section of an electric motor 10 according to an example of this disclosure. The electric motor 10 comprises a rotor 11, a stator 12 and an inverter 20 or at least parts of the inverter 20. Accordingly, the electric motor 10 may be also referred to as an inverter-integrated electric motor or electric machine, for example.

The stator 12 may comprise one or more (stator) core portions 13, e.g., comprising one or more (stator) cores, e.g., winding cores. In particular, the electric motor 10 may comprise a power module section 21 and a capacitor section 25 as parts of the inverter 20. The power module section 21 may comprise one or more power modules 22 of the inverter 20, each of which may comprise one or more semiconductor chips. The capacitor section 25 may comprise a capacitor 26 of the inverter 20.

The electric motor 10 of Fig. 1a has an integrated cooling concept. Specifically, the electric motor 10 comprises a first channel 30 arranged in between the stator 12 and a first side 23 of the power module section 21 for conveying a coolant 32 (indicated in Fig. 1b by means of the flow direction of the coolant inside the first channel 30) in between the stator 12 and the first side 23, thereby cooling both, the stator 12 and the power module section 21 in parallel or simultaneously or, in other words, at the same time. Further, the electric motor 10 comprises a second channel 31 for conveying a coolant 32, which may be the same as the one of the first channel 30 or a different coolant 32, i.e., from a different cooling system or cooling circuit. The second channel 31 is arranged at a second side 24 of the power module section 21 opposite the first side 23. In this example, the second channel 31 is arranged between the second side 24 of the power module section 21 and the capacitor section 25 or capacitor 26, thereby cooling both, the power module section 21 and the capacitor section 25 in parallel or simultaneously or, in other words, at the same time.

The cooling system(s) or cooling circuit(s) (not shown) supplying the first channel 30 and the second channel 31 with the coolant 32 need not to be present or integrated into the electric motor 10. However, optionally, the cooling system(s) or cooling circuit(s) may be partially, i.e., with one or more parts thereof, or fully integrated in the electric motor 10 or attached thereto, e.g., with one or more hoses, compressor, etc. for cooling the coolant 32.

The first channel 30 and the second channel 31 are arranged coaxial to each other in this example. Moreover, in particular, the rotor 11, the stator 12, the power module section 21, the first channel 30, and the second channel 31 are arranged coaxial to each other. The first channel 30 extends in length around a circumference of the power module section 21, while the second channel 31 extends in length around a circumference of the capacitor section 25. Further, in this example, the capacitor section 25 or capacitor 26 is surrounded by the stator 12, the rotor 11, the power module section 21, the first channel 30, and the second channel 31. Further, in this example, the rotor surrounds the stator 12 and the stator 12 surrounds the power module section 21.

In the example of the electric motor 10 of Fig. 1a, the rotor 11, the stator 12, the power module section 21, the first channel 30, and the second channel 31 are in particular configured as layers of the electric motor 10. These layers are extending in a radial extension of the electric motor 11. Perpendicular to the radial extension, the electric motor 11 has an axial extension In particular, the rotor 11 is configured as an external layer of the electric motor 10, while the capacitor section 25 is configured as a core of the electric motor 10. The stator 12, the power module section 21, the first channel 30, and the second channel 31 are configured as layers in between the rotor 11 and the capacitor section 25. In any case, in this example, the rotor 11 is (directly) adjacent to the stator 12, which is (directly) adjacent to the first channel 30, which is (directly) adjacent to the power module section 21, which is (directly) adjacent to the second channel 31, which is (directly) adjacent to the capacitor section 25.

Figure 1b shows a portion of the electric motor 10, namely an electric motor segment 40 comprising a core portion 13 of the stator, a portion of the first channel 30, a portion of the second channel 31, and a portion of the power module section 21 having one of the power modules 22. The electric motor segment 40 has a conical shape from the outside, i.e., the rotor 11, towards the inside, i.e., the capacitor section 25, of the electric motor 10. In the example of Fig. 1a, the electric motor 10 comprises nine such electric motor segments 40, which are designed equally. Accordingly, the electric motor segments 40 may be easily serviced in case of a failure by replacement.

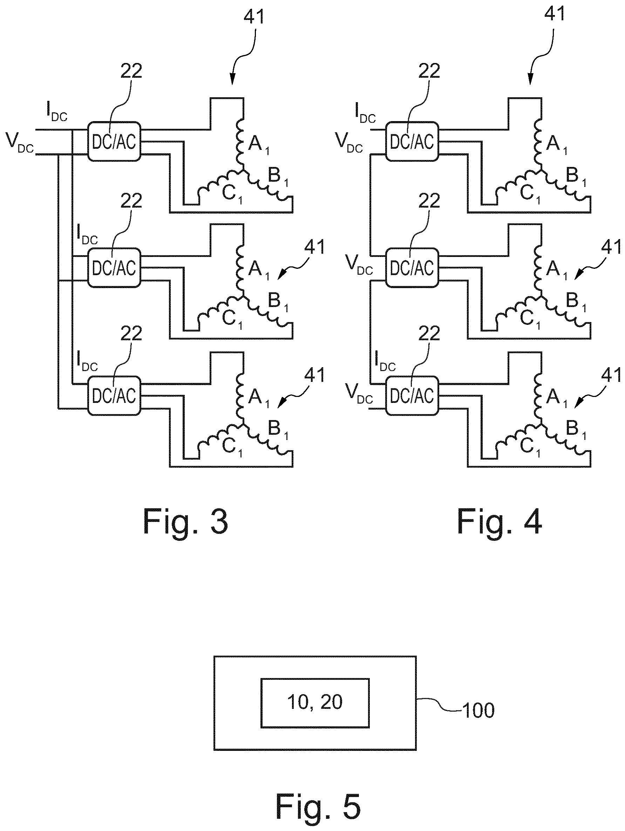

Three of the electric motor segments 40 may together form an electric motor module 41 (see Figs. 3 and 4), in which each one of the electric motor segments 41 may be providing one of three phases of alternating current of the electric motor module 41 (see Figs. 3 and 4). Accordingly, the electric motor 10 of Fig. 1a has exemplary three electric motor modules 41. However, it may be more or less depending on the power rating of the electric motor 10.

Figure 2a shows an electric motor 10 similar to the one of Fig. 1a explained above. However, in this example, different from the electric motor 10 of Fig. 1a, the stator 12 is surrounding the rotor 11 and the power module section 21 is surrounding the stator 12. Specifically, while the rotor 11 in Fig. 1a is located at an outer side of the electric motor 10, the rotor 11 in Fig. 2a is located in the center of the electric motor 10. The capacitor section 25, which is in the center of the electric motor 10 of Fig. 1a, is located at the outer side of the electric motor 10 in Fig. 2a. Thus, in Fig. 2a, the capacitor section 25 surrounds the stator 12, the rotor 11, the power module section 21, the first channel 30, and the second channel 31. Further, the rotor 11, the power module section 21, the first channel 30, and the second channel 31 are configured as layers in between the rotor 12 and the capacitor section 25.

Fig. 2b shows the electric motor segment 40 of the electric motor 10 of Fig. 2a similar to the one of Fig. 1b but with the different arrangement of components as explained above. Note that the power modules 22 in Figs. 2a and 2b are not shown for illustrative purposes only. Note further that the relative arrangement of the first channel 30 and the second channel 31 with respect to the stator 12, the power module section 21 and the capacitor section 25 may be the same in Figs. 1a and 2a and 1b and 2b, respectively.

Figs. 3 and 4 show schematic views of different examples of electrical connection of the exemplary three electric motor modules 41 of each one of the electric motors 10 of Figs. 1a and 2a. In Fig. 3, the electric motor modules 41 are connected in parallel with each other, the power modules 22 thereof transforming the alternating current (AC) from the different phases A₁, B₁, C₁ of each one of the electric motor segments 40 into direct current (DC) with current I_{DC} and voltage V_{DC}. In Fig. 4, the electric motor modules 41 are connected in series with each other. In the configuration of Fig. 3, the current I_{DC} is higher and the voltage V_{DC} is lower compared to the configuration of Fig. 4.

Figure 5 shows a schematic illustration of a vehicle 100 comprising the electric motor 10 with the therein integrated inverter 20.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 10: electric motor
- 11: rotor
- 12: stator
- 13: core portion
- 20: inverter
- 21: power module section
- 22: power module
- 23: first side
- 24: second side
- 25: capacitor section
- 26: capacitor
- 30: first channel
- 31: second channel
- 32: coolant
- 40: electric motor segment
- 41: electric motor module
- 100: vehicle

## Claims

1. An electric motor (10) comprising a rotor (11), a stator (12), a power module section (21) having one or more power modules (22) of an inverter (20), a first channel (30) arranged in between the stator (12) and a first side (23) of the power module section (21) for conveying a coolant (32) in between the stator (12) and the first side (23) of the power module section (21), and a second channel (31) arranged at a second side (24) of the power module section (21) for conveying a coolant (32) alongside the second side (24) of the power module section (31), the first side (23) being located opposite of the second side (24).

2. The electric motor (10) of claim 1, the first channel (30) extending around at least half of a circumference of the power module section (21) or the stator (12).

3. The electric motor (10) of claim 2, the rotor (11), the stator (12), at least part of the power module section (21), at least part of the first channel (30), and at least part of the second channel (31) being arranged coaxial to each other.

4. The electric motor (10) of any one of the previous claims, the electric motor (10) comprising a capacitor section (25) having a capacitor (26) of the inverter (20), the second channel (31) being arranged in between the capacitor section (25) and the second side (24) of the power module section (21) for conveying the coolant (32) between the capacitor section (25) and the second side (24) of the power module section (21).

5. The electric motor (10) of claim 4, the second channel (31) extending around at least half of a circumference of the power module section (21) or the capacitor section (25).

6. The electric motor (10) of claim 4 or 5, at least part of the capacitor section (25) being surrounded by or surrounding the stator (12), the rotor (11), the power module section (21), the first channel (30), and the second channel (31).

7. The electric motor (10) of any one of claims 4 to 6, the rotor (11), the stator (12), at least part of the power module section (21), at least part of the first channel (30), at least part of the second channel (31), and at least part of the capacitor section (25) being arranged coaxial to each other.

8. The electric motor (10) of any one of the previous claims, the electric motor (10) comprising an electric motor module (41), the electric motor module (41) comprising three electric motor segments (40), each one of the electric motor segments (40) comprising at least one core portion (13) of the stator (12), at least a portion of the first channel (30), at least a portion of the second channel (31), and one of the power modules (22), the electric motor module (41) being configured such that each one of the electric motor segments (40) provides one of three phases of alternating current of the electric motor module (41).

9. The electric motor (10) of any one of claims 8, the electric motor (10) comprising two or three electric motor modules (41).

10. The electric motor (10) of claim 9, the electric motor modules (41) being electrically connected to each other in parallel.

11. The electric motor (10) of claim 9, the electric motor modules (41) being electrically connected to each other in series.

12. The electric motor (10) of any one of the previous claims, the one or more power modules (22) comprising a semiconductor chip.

13. The electric motor (10) of any one of the previous claims, the rotor (11) at least partially surrounding the stator (12) and the stator (12) at least partially surrounding the power module section (21).

14. The electric motor (10) of any one of claims 1 to 12, the stator (12) at least partially surrounding the rotor (11) and the power module section (21) at least partially surrounding the stator (12).

15. A vehicle (100) comprising the electric motor (10) according to any one of the previous claims.
